# EUROPÄISCHE PATENTSCHRIFT

(11) **EP 2 196 006 B1**
(45) Veröffentlichungstag und Bekanntmachung des Hinweises auf die Patenterteilung: **15.06.2011**
(21) Anmeldenummer: 08801651.4
(22) Anmeldetag: 21.08.2008
(51) Int. Cl.: H04M 1/60

(54) **VERFAHREN ZUR ÜBERPRÜFUNG DER EIGNUNG EINES MOBILTELEFONS**
METHOD FOR CHECKING THE SUITABILITY OF A MOBILE PHONE
PROCÉDÉ POUR CONTRÔLER LA COMPATIBILITÉ D'UN TÉLÉPHONE MOBILE

(30) Priorität: 07.09.2007 DE 102007042795
(43) Veröffentlichungstag der Anmeldung: 16.06.2010
(73) Patentinhaber: Bayerische Motoren Werke, 80809 München (DE)
(72) Erfinder: HAYDN, Andreas, 94032 Passau (DE); TUSCHE, Michael, 85551 Kirchheim (DE)
(74) Vertreter: Kammermeier, Peter Frank
(86) Internationale Anmeldenummer: PCT/EP2008/006874
(87) Internationale Veröffentlichungsnummer: WO 2009/033554

(56) Entgegenhaltungen:
- WO-A-98/59425
- WO-A-02/060078
- US-A- 5 659 594

## Beschreibung

Die Erfindung betrifft ein Verfahren zur Überprüfung der Eignung eines Mobiltelefons zur Anbindung an zumindest eine Kraftfahrzeugeinrichtung eines Kraftfahrzeugs.

In heutigen Kraftfahrzeugen sind zahlreiche Funktionen verfügbar, die auf einer Anbindung des Mobiltelefons an zumindest eine Kraftfahrzeugeinrichtung eines Kraftfahrzeugs basieren. Die Kraftfahrzeugeinrichtung kann dabei beispielsweise als fest im Kraftfahrzeug installierte Freisprecheinrichtung ausgebildet sein, die das Telefonieren im Kraftfahrzeug für den Fahrzeugnutzer komfortabler macht. Alternativ oder zusätzlich kann die Kraftfahrzeugeinrichtung beispielsweise auch als Telematikeinheit ausgebildet sein, die über das Mobiltelefon, das dann als Modem fungiert, Daten mit Service-Anbietern und/oder mit anderen Kraftfahrzeugen austauscht.

Um ein fehlerfreies Funktionieren und den vollen gewünschten Funktionsumfang zu gewährleisten, muss das verwendete Mobiltelefon zur Anbindung an die Kraftfahrzeugeinrichtung geeignet sein. Hersteller von Kraftfahrzeugen geben typischerweise Kompatibilitätslisten heraus, anhand derer ein Kunde überprüfen kann, welchen Typ und welche Firmware- bzw. Software-Version ein Mobiltelefon aufweisen muss, um mit einem bestimmten Kraftfahrzeug kompatibel zu sein. Dabei ist vielfach neben dem Kraftfahrzeugtyp auch nach Ausstattungsvarianten des Kraftfahrzeugs und/oder nach Firmware- bzw. Software-Versionen von Komponenten des Kraftfahrzeugs zu differenzieren. Dementsprechend kann die Bestimmung der Kompatibilität sehr mühsam und aufwändig ausfallen. Die Möglichkeit zur Kompatibilitätsprüfung anhand der Kompatibilitätslisten wird daher von manchen Fahrzeugnutzern gescheut oder zumindest nicht freiwillig wahrgenommen. Im Ergebnis wird durch die Bereitstellung von Kompatibilitätslisten nur ein begrenzter Anteil aller betroffenen Fahrzeugnutzer dazu bewegt, ein für die Anbindung an sein Fahrzeug geeignetes Mobiltelefon zu verwenden.

Wird ein Mobiltelefon verwendet, das nicht oder nur eingeschränkt zur Anbindung an ein Kraftfahrzeug bzw. an die im jeweiligen Fall relevante Kraftfahrzeugeinrichtung geeignet ist, so kann dies in Fehlfunktionen und/oder in einem eingeschränkten Funktionsumfang resultieren.

Das Dokument WO 02/060078 A2 offenbart eine Freisprecheinrichtung für den Betrieb von Mobiltelefonen in Kraftfahrzeugen mit einer im Kraftfahrzeug installierbaren Montageeinheit für eine leicht auswechselbare gerätespezifische, ein Mobiltelefon temporär aufnehmende Halterung mit auf einem Mikroprozessor gespeicherten gerätespezifischen Daten, wobei vorgesehen ist, dass die Halterung und/oder die Montageeinheit an einem im Kraftfahrzeug ohnehin, z. B. für den Betrieb eines Autoradios, eines Fernsehers, eines Navigationssystems, des Internets und/oder eines Kommunikationssystems vorhandenes Steuergerät anschließbar ist, bzw. die Halterung und/oder die Montageeinheit an ein im Kraftfahrzeug installierbares Schnittstellenmodul anschließbar ist, und an der Halterung und/oder der Montageeinheit und/oder an dem Schnittstellenmodul ein kabelloses Fernsteuergerät anschließbar ist, über das auch andere Funktionen als die Freisprecheinrichtung im Kraftfahrzeug fernsteuerbar sind, wie sie etwa über ein Multifunktionslenkrad ansteuerbar wären bzw. dass die Halterung und/oder die Montageeinheit an einem im Kraftfahrzeug installierbaren Schnittstellenmodul, das in einem Mikroprozessor gespeicherte fahrzeugspezifische Daten enthalten kann, anschließbar ist und das auch mit einem Spracherkenner ausgestattet ist, bzw. dass mehrere jeweils einen Mikroprozessor aufweisende Halterungen und/oder Montageeinheiten vorgesehen sind, die an einem Bus zu einem gemeinsamen im Kraftfahrzeug installierbaren, gegebenenfalls einen Mikroprozessor aufweisenden Schnittstellenmodul anschließbar sind. Dabei wird gegebenenfalls auch eine so genannte Berechtigungsprüfung hinsichtlich der Zulässigkeit des Betriebs eines Mobiltelefons insbesondere an dem Schnittstellenmodul durchgeführt.

Das Dokument WO 98/59425 A1 offenbart eine Kraftfahrzeug-Einbauvorrichtung für ein Mobiltelefon, aufweisend eine Zentralsteuereinheit, eine Schnittstelle zum Signalaustausch zwischen der Zentralsteuereinheit des Mobiltelefons und dem Kraftfahrzeug, und eine kraftfahrzeugspezifische Anpassungssteuereinheit zur Anpassung von Funktionen der Schnittstelle und/oder der Zentralsteuereinheit an den jeweiligen Kraftfahrzeugtyp.

Eine Aufgabe der Erfindung besteht darin, ein verbessertes Verfahren zur Überprüfung der Eignung eines Mobiltelefons zur Anbindung an zumindest eine Kraftfahrzeugeinrichtung eines Kraftfahrzeugs bereitzustellen.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Die Erfindung entbindet den Fahrzeugnutzer von der oft aufwändigen und/oder mühsamen und/oder fehleranfälligen Bestimmung der Eignung seines Mobiltelefons zur Anbindung an die entsprechende Einrichtung seines Kraftfahrzeugs, beispielsweise eine fest installierte Freisprecheinrichtung.

Die Bewertung der Eignung erfolgt erfindungsgemäß vielmehr bei einem stationären Service-Center. Dabei kann wahlweise ein Mitarbeiter des Service-Centers die Kommunikation des Ergebnisses der Bewertung an den Fahrzeugnutzer veranlassen und/oder vornehmen oder die Kommunikation kann selbsttätig von einem automatisierten Service-Center, das beispielsweise als Recheneinheit oder Verbund mehrerer Recheneinheiten ausgebildet sein kann, in Antwort auf eine entsprechende Anfrage ausgegeben werden.

Erfindungsgemäß werden bei dem Kraftfahrzeug Fahrzeugkenndaten zur Beschreibung der Kraftfahrzeugeinrichtung bestimmt.

Im einfachsten Fall beziehen sich diese Fahrzeugkenndaten unmittelbar auf die Kraftfahrzeugeinrichtung selbst, beispielsweise auf den Typ der Freisprecheinrichtung und gegebenenfalls deren Firmware-/Software-Version.

Die Fahrzeugkenndaten können sich aber auch nur mittelbar auf die Kraftfahrzeugeinrichtung beziehen. Beispielsweise können sich die Fahrzeugkenndaten auf den Kraftfahrzeugtyp (z.B. "BMW 335d") und/oder auf Ausstattungsvarianten des Kraftfahrzeugs (z.B. "Sonderausstattung Freisprecheinrichtung mit Bluetooth-Schnittstelle") und/oder auf Firmware- bzw. Software-Versionen anderer Komponenten des Kraftfahrzeugs (z.B. Datum des Software-Stands wesentlicher Steuergeräte des Kraftfahrzeugs) beziehen. Solche Angaben reichen in der Regel aus, um später im Service-Center eine Kompatibilitätsprüfung vorzunehmen, indem aus einzelnen oder sämtlichen der oben genannten mittelbar auf die Kraftfahrzeugeinrichtung bezogenen Angaben die genauen Eigenschaften der Kraftfahrzeugeinrichtung abgeleitet werden.

Die bestimmten Fahrzeugkenndaten können sich auch auf eine Bezeichnung des individuellen Kraftfahrzeugs (z.B. Fahrgestellnummer oder KFZ-Kennzeichen) beschränken. Sofern bei dem Service-Center Mittel (z.B. in Form einer Kunden-Datenbank) bereitgestellt werden, die es erlauben, aus solchen Fahrzeugkenndaten auf den Kraftfahrzeugtyp und/oder auf Ausstattungsvarianten des Kraftfahrzeugs und/oder auf Firmware- bzw. Software-Versionen von Komponenten des Kraftfahrzeugs zu schließen, reichen auch solche Angaben aus, um später im Service-Center eine Kompatibilitätsprüfung vorzunehmen. Dies gilt insbesondere, wenn aus der Bezeichnung des individuellen Kraftfahrzeugs die genauen Eigenschaften der Kraftfahrzeugeinrichtung abgeleitet werden können.

Außerdem werden erfindungsgemäß mittels der Kraftfahrzeugeinrichtung Telefonkenndaten zur Beschreibung des Mobiltelefons erfasst. Insbesondere sind ein Gerätetyp des Mobiltelefons und Angaben zur Firmware- bzw. Software-Version als Telefonkenndaten relevant.

Um eine Bewertung der Kompatibilität zwischen Mobiltelefon und Kraftfahrzeugeinrichtung vornehmen zu können, werden bei einem stationären Service-Center Bewertungsmittel zur Bewertung der Eignung eines durch Telefonkenndaten beschriebenen Mobiltelefons zur Anbindung an eine durch Fahrzeugkenndaten beschriebene Kraftfahrzeugeinrichtung bereitgestellt.

Diese Bewertungsmittel können als Recheneinheit ausgebildet sein, die geeignet ist, nach manueller oder automatischer Eingabe von Telefonkenndaten und Fahrzeugkenndaten ein Ergebnis betreffend die Eignung des durch die Telefonkenndaten beschriebenen Mobiltelefons zur Anbindung an die durch die Fahrzeugkenndaten beschriebene Kraftfahrzeugeinrichtung bereitzustellen. Dazu kann die Recheneinheit beispielsweise auf eine in einer Speichereinheit abgelegte und als Look-up-Table organisierte Zuordnungstabelle zugreifen, deren Inhalt im Wesentlichen einer Kompatibilitätsliste entspricht. Zusätzlich ist die Recheneinheit vorzugsweise dazu geeignet, vorab gegebenenfalls die oben genannten Schlüsse von eventuell nur mittelbar auf die Kraftfahrzeugeinrichtung bezogenen Fahrzeugkenndaten auf die genauen Eigenschaften der Kraftfahrzeugeinrichtung zu ziehen.

An Stelle von als Recheneinheit ausgebildeten Bewertungsmitteln können auch anders ausgebildete Bewertungsmittel, beispielsweise schriftliche Kompatibilitätslisten, bei dem Service-Center bereitgestellt werden, mittels derer ein Mitarbeiter des Service-Centers anhand von bestimmten Telefonkenndaten und Fahrzeugkenndaten eine Kompatibilitätsprüfung vornehmen kann.

Schließlich werden die oben genannten Fahrzeugkenndaten und die oben genannten Telefonkenndaten über eine Kommunikationsverbindung zwischen Kraftfahrzeug und Service-Center an das oben genannte Service-Center übertragen, um dort die Eignung des Mobiltelefons zur Anbindung an die Kraftfahrzeugeinrichtung mittels der bei dem Service-Center bereitgestellten Bewertungsmittel zu bewerten.

Bei Verfügbarkeit von als Recheneinheit ausgebildeten Bewertungsmitteln werden die übertragenen Fahrzeugkenndaten und Telefonkenndaten vorzugsweise automatisch nach ihrer Übertragung in die Recheneinheit eingegeben und automatisch ein Bewertungsvorgang gestartet.

Bei Vornahme der Bewertung durch einen Mitarbeiter des Service-Centers werden die Fahrzeugkenndaten und die oben genannten Telefonkenndaten vorzugsweise optisch bei dem Service-Center zur Anzeige gebracht, damit der Mitarbeiter sie ablesen kann.

Erfindungsgemäß dient als Kommunikationsverbindung zur Übertragung der Fahrzeugkenndaten und Telefonkenndaten eine bereits bestehende oder leicht einrichtbare Kommunikationsverbindung des Kraftfahrzeugs mit dem Service-Center, die unabhängig von dem Mobiltelefon ist. Besonders vorteilhaft ist die Nutzung einer unabhängig von der Erfindung bereitgestellten bzw. bereitstellbaren Verbindung des Kraftfahrzeugs zu dem Service-Center.

Beispielsweise kann hierzu eine ohnehin unabhängig von der Erfindung bereitgestellte bzw. bereitstellbare Verbindung des Kraftfahrzeugs zu einem Internet-Portal genutzt werden (z.B. Verbindung über eine gesonderte Telematikeinheit des Kraftfahrzeugs zum Internet-Portal "BMW Online"). Es muss dann keine Kommunikationsverbindung eigens für die Zwecke der Erfindung vorgesehen werden.

Der Server des Internet-Portals, mit dem das Kraftfahrzeug zur Nutzung des Internet-Portals verbunden bzw. verbindbar ist, kann dann gemäß einer ersten Variante dieser ersten Ausführungsform der Erfindung seinerseits mit dem Service-Center im Sinne der vorliegenden Erfindung verbunden bzw. verbindbar sein. Dies ist beispielsweise über eine gewöhnliche Internet-Verbindung problemlos möglich.

Alternativ kann der Server des Internet-Portals, mit dem das Kraftfahrzeug zur Nutzung des Internet-Portals verbunden bzw. verbindbar ist, gemäß einer zweiten Variante dieser ersten Ausführungsform der Erfindung gleichzeitig selbst als Service-Center im Sinne der vorliegenden Erfindung fungieren. Die Umsetzung der Erfindung erfordert dann einen sehr geringen Kommunikationsaufwand.

Sofern die Kraftfahrzeugeinrichtung, an die das Mobiltelefon angebunden wird, nicht unmittelbar an der für die Übertragung der Fahrzeugkenndaten und Telefonkenndaten genutzten Kommunikationsverbindung beteiligt ist, werden die Telefonkenndaten zunächst fahrzeugintern von der Kraftfahrzeugeinrichtung zum fahrzeugseitigen Kommunikationspartner (z.B. gesonderte Telematikeinheit) dieser Kommunikationsverbindung übertragen. Sofern die erforderlichen Fahrzeugkenndaten bei diesem fahrzeugseitigen Kommunikationspartner nicht vorliegen, können auch die Fahrzeugkenndaten zunächst fahrzeugintern von der Kraftfahrzeugeinrichtung dorthin übertragen werden.

Das erfindungsgemäße Verfahren zur Überprüfung der Eignung des Mobiltelefons wird vorzugsweise nach jeder erstmaligen Verbindung eines Mobiltelefons mit der Kraftfahrzeugeinrichtung durchgeführt. Es kann auch nach jeder Neuverbindung durchgeführt werden. Es kann alternativ oder zudem zyklisch wiederholt oder zu fest vorgegebenen Zeitpunkten oder auf Anforderung des Fahrzeugnutzers vorgenommen werden.

Grundsätzlich können die Fahrzeugkenndaten und Telefonkenndaten sowohl organisatorisch als auch zeitlich getrennt voneinander übertragen werden. Beispielsweise können die Fahrzeugkenndaten bei einem auch für andere Zwecke als die der Erfindung (z.B. Internet-Portal) genutzten Service-Center ohnehin vorliegen oder nach einer früheren Übertragung gespeichert bleiben und die Telefonkenndaten werden später separat übertragen. Insbesondere dann, wenn das Service-Center aus Sicht des Kraftfahrzeugs jedoch ausschließlich für die Zwecke der Erfindung dient, ist es zweckmäßig Fahrzeugkenndaten und Telefonkenndaten zeitnah benachbart oder sogar in einer einzigen Nachricht an das Service-Center zu übertragen.

Gemäß einer zweiten bevorzugten Ausführungsform der vorliegenden Erfindung wird die Kommunikationsverbindung zur Übertragung der Fahrzeugkenndaten und Telefonkenndaten über das Mobiltelefon selbst hergestellt. Beispielsweise kann das Kraftfahrzeug derart eingerichtet und die Anbindung des Mobiltelefons an das Kraftfahrzeug bzw. die Kraftfahrzeugeinrichtung derart ausgeführt sein, dass das Mobiltelefon als Modem für einen Kommunikations- und/oder Servicedienst des Kraftfahrzeugs dient, bei dem das Kraftfahrzeug über dieses Modem mit einem stationären Dienstanbieter-Center kommuniziert. Beispielsweise kann der Kommunikations- und/oder Servicedienst die automatische und/oder kundeninitiierte Übertragung wartungsrelevanter Daten vom Kraftfahrzeug zu dem Dienstanbieter-Center und eine eventuelle anschließende telefonische Terminvereinbarung vorsehen.

Auch bei dieser Ausführungsform der Erfindung muss keine Kommunikationsverbindung eigens für die Zwecke der Erfindung vorgesehen werden. Selbst wenn das Mobiltelefon nur eingeschränkt zur Anbindung an die Kraftfahrzeugeinrichtung geeignet ist, kann es in vielen Fällen zumindest dazu dienen, die erforderliche Kommunikationsverbindung zur Übertragung der Fahrzeugkenndaten und Telefonkenndaten bereitzustellen.

Das Dienstanbieter-Center kann dann gemäß einer ersten Variante dieser zweiten Ausführungsform der Erfindung seinerseits mit dem Service-Center im Sinne der vorliegenden Erfindung verbunden bzw. verbindbar sein. Dies ist beispielsweise über eine gewöhnliche Internet-Verbindung problemlos möglich.

Alternativ kann das Dienstanbieter-Center gemäß einer zweiten Variante dieser zweiten Ausführungsform der Erfindung gleichzeitig selbst als Service-Center im Sinne der vorliegenden Erfindung fungieren. Die Umsetzung der Erfindung erfordert dann einen sehr geringen Kommunikationsaufwand.

Vorzugsweise wird das Ergebnis der Bewertung hinsichtlich der Eignung des Mobiltelefons zur Anbindung an die Kraftfahrzeugeinrichtung dem Fahrzeugnutzer anschließend signalisiert. Der Fahrzeugnutzer kann so auf eine eventuell nicht gegebene oder eingeschränkte Eignung aufmerksam gemacht werden. In vielen Fällen kann durch einen solchen dedizierten Hinweis der Fahrzeugnutzer zur Behebung der Inkompatibilität angehalten werden. Ohne einen solchen dedizierten Hinweis besteht die Gefahr, dass der Fahrzeugnutzer einen eingeschränkten Funktionsumfang und/oder Fehlfunktionen gar nicht erkennt oder als prinzipbedingt hinnimmt. Durch den dedizierten Hinweis kann der Fahrzeugnutzer jedoch zur Behebung der Inkompatibilität, beispielsweise durch Anschaffung und Verwendung eines voll kompatiblen Mobiltelefons, angehalten werden.

Die Signalisierung des Ergebnisses der Bewertung kann in unterschiedlicher Art und Weise erfolgen. Zunächst kann der Fahrzeugnutzer durch einen Mitarbeiter des Service-Centers auf dem Mobiltelefon angerufen und über das Ergebnis der Bewertung informiert werden. Dies kann auch im Rahmen einer ohnehin stattfindenden Servicetermin-Vereinbarung stattfinden.

Eine entsprechende Eignungsnachricht kann jedoch auch mit rein technischen Mitteln übermittelt werden. Vorzugsweise wird zur Signalisierung des Ergebnisses der Bewertung hinsichtlich der Eignung des Mobiltelefons zur Anbindung an die Kraftfahrzeugeinrichtung eine Eignungsnachricht an das Mobiltelefon oder die Kraftfahrzeugeinrichtung übermittelt.

Um eine solche Eignungsnachricht, betreffend die Eignung des Mobiltelefons zur Anbindung an die Kraftfahrzeugeinrichtung, an das Mobiltelefon übermitteln zu können, können gegebenenfalls Mittel zur Übermittlung der Eignungsnachricht von dem Service-Center an das Mobiltelefon bereitgestellt werden.

Im einfachsten Fall wird hierzu die Kommunikationsverbindung, die auch zum Übertragen der Fahrzeugkenndaten und der Telefonkenndaten an das Service-Center dient, bidirektional ausgeführt, um Nachrichten auch in der umgekehrten Richtung vom Service-Center an des Mobiltelefon übertragen zu können. Sofern das Mobiltelefon dabei nicht selbst als Modem dient, kann die Eignungsnachricht von der Kraftfahrzeugeinrichtung an das Mobiltelefon weitergeleitet werden.

Die an das Mobiltelefon übermittelte Eignungsnachricht kann beispielsweise auf einem Display des Mobiltelefons ausgegeben werden oder die Ausgabe eines entsprechenden Hinweises auf diesem Display veranlassen.

Alternativ oder zusätzlich können Mittel zur Übermittlung der Eignungsnachricht von dem Service-Center an die Kraftfahrzeugeinrichtung bereitgestellt werden.

Auch in diesem Fall ist es am einfachsten, die Kommunikationsverbindung, die auch zum Übertragen der Fahrzeugkenndaten und der Telefonkenndaten an das Service-Center dient, bidirektional auszuführen, um Nachrichten auch in der umgekehrten Richtung vom Service-Center an die Kraftfahrzeugeinrichtung übertragen zu können. Sofern das Mobiltelefon dabei als Modem dient, kann die Eignungsnachricht von dem Mobiltelefon an die Kraftfahrzeugeinrichtung weitergeleitet werden.

Die an die Kraftfahrzeugeinrichtung übermittelte Eignungsnachricht kann beispielsweise auf einem Display im Fahrzeuginneren ausgegeben werden oder die Ausgabe eines entsprechenden Hinweises auf diesem Display veranlassen.

Vorzugsweise wird die Eignungsnachricht von dem Service-Center selbsttätig in Antwort auf die Übertragung der Fahrzeugkenndaten und der Telefonkenndaten ausgegeben. Das Ergebnis ist dann unmittelbar nach der Anfrage verfügbar.

Als Hilfestellung für eine Behebung einer nicht bestehenden oder eingeschränkten Eignung des Mobiltelefons können dem Fahrzeugnutzer beispielsweise gemeinsam mit der Eignungsnachricht oder im Nachgang zu dieser auch Hinweise auf geeignete, voll kompatible Modelle gegeben werden.

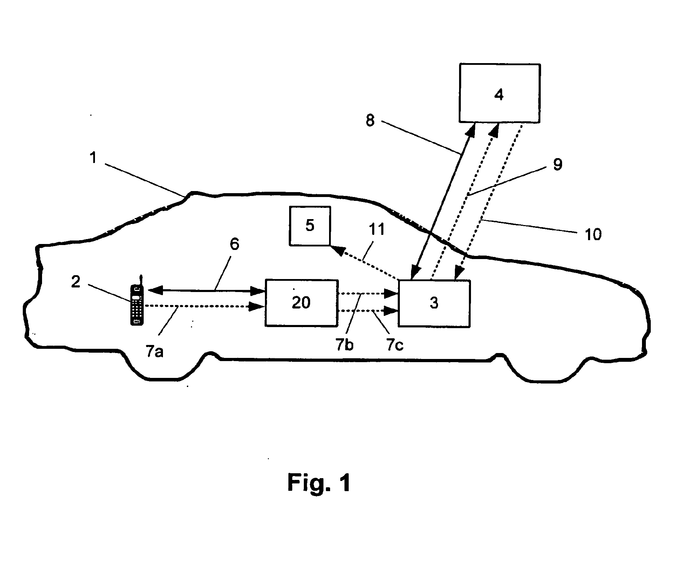

Im Folgenden wird anhand der beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Im Einzelnen zeigt schematisch
Fig. 1 den Kommunikationsfluss bei einem Ausführungsbeispiel für die Erfindung.

In Fig. 1 ist der Kommunikationsfluss bei einem Ausführungsbeispiel für die Erfindung dargestellt. Ein Mobiltelefon 2 sei an eine fest in ein Kraftfahrzeug 1 installierte Freisprecheinrichtung 20 angebunden. Das Mobiltelefon 2 und die Freisprecheinrichtung 20 kommunizieren dabei bidirektional über eine Bluetooth-Verbindung 6, jedoch ist der Funktionsumfang des Systems aus Mobiltelefon 2 und Freisprecheinrichtung 20 eingeschränkt, da das Mobiltelefon nicht voll mit der Freisprecheinrichtung 20 kompatibel ist. Beispielsweise kann das Telefonbuch des Mobiltelefons 2 nicht genutzt werden.

Bei der Herstellung der Bluetooth-Verbindung 6 wird automatisch ein Verfahren zur Überprüfung der Eignung des Mobiltelefons 2 zur Anbindung an die Freisprecheinrichtung 20 gestartet.

Das Verfahren beruht im vorliegenden Fall auf der Nutzung einer bidirektionalen Kommunikationsverbindung 8, die ohnehin unabhängig von der Freisprecheinrichtung 20 zwischen einer Telematikeinheit 3 des Kraftfahrzeugs und einem Dienstanbieter-Center 4 für Telematikdienste besteht.

Für die Zwecke des Überprüfungsverfahrens werden die Telematikeinheit 3 und das Dienstanbieter-Center 4 geeignet modifiziert und die Freisprecheinrichtung wird an die Telematikeinheit 3 angebunden.

Zunächst werden Fahrzeugkenndaten zur Beschreibung der Freisprecheinrichtung 20 bei dem Kraftfahrzeug bestimmt. Diese Fahrzeugkenndaten werden im vorliegenden Fall von der Freisprecheinrichtung 20 selbst aus einem Speicherbereich der Freisprecheinrichtung 20 ausgelesen und an die Telematikeinheit 3 gesendet (Pfeil 7b).

Zudem werden Telefonkenndaten zur Beschreibung des Mobiltelefons 2 erfasst. Die Freisprecheinrichtung 20 fordert diese Telefonkenndaten von dem Mobiltelefon 2 nach dessen Anbindung an, empfängt sie (Pfeil 7a) und leitet sie an die Telematikeinheit 3 weiter (Pfeil 7c).

Die durch Pfeil 7a dargestellte Nachricht wird über die physikalische Kommunikationsverbindung 6 übertragen, ist jedoch der Übersichtlichkeit halber als logische Nachricht unabhängig von der Kommunikationsverbindung 6 als eigener Pfeil dargestellt. Entsprechendes gilt für die Kommunikationsverbindung 8 und die Nachrichten 9 und 10.

Bei dem Dienstanbieter-Center 4 werden, damit es als stationäres Service-Center im Sinne der vorliegenden Erfindung dienen kann, Bewertungsmittel zur Bewertung der Eignung eines durch Telefonkenndaten beschriebenen Mobiltelefons zur Anbindung an eine durch Fahrzeugkenndaten beschriebene Freisprecheinrichtung bereitgestellt. Es wird hierzu eine Look-up-Table bei dem Dienstanbieter-Center 4 vorgehalten, in der anhand empfangener Telefonkenndaten und Fahrzeugkenndaten die Eignung ermittelbar ist. Die Look-up-Table wird regelmäßig auf den neuesten Stand gebracht, insbesondere dann, wenn eine neue Software-Version für Freisprecheinrichtungen in Kraftfahrzeugen, die als Nutzer des Service-Centers in Betracht kommen, marktverfügbar wird.

Über die Kommunikationsverbindung 8 werden die Fahrzeugkenndaten und die Telefonkenndaten an das Dienstanbieter-Center 4 übertragen (Pfeil 9) werden. Die Eignung des Mobiltelefons 2 zur Anbindung an die Freisprecheinrichtung 20 wird bei deren Empfang automatisch anhand der Look-up-Table bewertet und eine Antwort betreffend das Ergebnis der Bewertung wird über die Kommunikationsverbindung 8 an das Kraftfahrzeug bzw. die Telematikeinheit 3 zurückgesendet (Pfeil 10).

Zur Signalisierung des Ergebnisses der Bewertung wird das Ergebnis im vorliegenden Fall unmittelbar von der Telematikeinheit 3 an eine Anzeigeeinheit 5 im Fahrzeuginneren weitergegeben (Pfeil 11), die das Ergebnis dem Fahrzeugnutzer visualisiert. Gleichermaßen könnte das Ergebnis auch zunächst an die Freisprecheinrichtung 20 weitergegeben und von dieser an eine Anzeigeeinheit zur Visualisierung übertragen werden. Schließlich könnte das Ergebnis auch von der Freisprecheinrichtung 20 abermals an das Mobiltelefon 2 weitergegeben und von diesem zur Anzeige gebracht werden.

## Patentansprüche

1. Verfahren zur Überprüfung der Eignung eines Mobiltelefons (2) zur Anbindung an zumindest eine Kraftfahrzeugeinrichtung (20) eines Kraftfahrzeugs (1),
**dadurch gekennzeichnet,**
**dass** Fahrzeugkenndaten zur Beschreibung der Kraftfahrzeugeinrichtung bei dem Kraftfahrzeug bestimmt werden,
**dass** Telefonkenndaten zur Beschreibung des Mobiltelefons mittels der Kraftfahrzeugeinrichtung erfasst werden,
**dass** bei einem stationären Service-Center (4) Bewertungsmittel zur Bewertung der Eignung eines durch Telefonkenndaten beschriebenen Mobiltelefons zur Anbindung an eine durch Fahrzeugkenndaten beschriebene Kraftfahrzeugeinrichtung bereitgestellt werden,
**dass** die Fahrzeugkenndaten und die Telefonkenndaten über eine von dem Mobiltelefon unabhängig bestehende Kommunikationsverbindung (8) zwischen Kraftfahrzeug und Service-Center an das Service-Center übertragen werden, um die Eignung des Mobiltelefons zur Anbindung an die Kraftfahrzeugeinrichtung zu bewerten.

2. Verfahren nach Anspruch 1, **dadurch gekennzeichnet,**
**dass** die Fahrzeugkenndaten das Kraftfahrzeug betreffen und
**dass** bei dem Service-Center aus den Fahrzeugkenndaten Einrichtungskenndaten betreffend die Kraftfahrzeugeinrichtung gewonnen werden.

3. Verfahren nach Anspruch 1 oder 2, **dadurch gekennzeichnet,**
**dass** Mittel zur Übermittlung einer Eignungsnachricht (10), betreffend die Eignung des Mobiltelefons zur Anbindung an die Kraftfahrzeugeinrichtung, von dem Service-Center an das Mobiltelefon bereitgestellt werden.

4. Verfahren nach Anspruch 1 oder 2, **dadurch gekennzeichnet,**
**dass** Mittel zur Übermittlung einer Eignungsnachricht, betreffend die Eignung des Mobiltelefons zur Anbindung an die Kraftfahrzeugeinrichtung, von dem Service-Center an die Kraftfahrzeugeinrichtung bereitgestellt werden.

5. Verfahren nach Anspruch 3 oder 4, **dadurch gekennzeichnet,**
**dass** die Eignungsnachricht von dem Service-Center selbsttätig in Antwort auf die Übertragung der Fahrzeugkenndaten und der Telefonkenndaten ausgegeben wird.

## Claims

1. A method for checking the suitability of a mobile telephone (2) for connection to at least one motor vehicle device (20) of a motor vehicle (1), **characterised in that** characteristic vehicle data to describe the motor vehicle device are determined in the motor vehicle, **in that** characteristic telephone data to describe the mobile telephone are acquired by means of the motor vehicle device, **in that** evaluation means for evaluating the suitability of a mobile telephone described by characteristic telephone data for connection to a motor vehicle device described by characteristic vehicle data are provided at a stationary service centre (4), and **in that** characteristic vehicle data and the characteristic telephone data are transmitted via a communication connection (8) existing independently of the mobile telephone between the motor vehicle and service centre to the service centre in order to evaluate the suitability of the mobile telephone for connection to the motor vehicle device.

2. A method according to claim 1, **characterised in that** the characteristic vehicle data relate to the motor vehicle and **in that** characteristic device data relating to the motor vehicle device are obtained from the characteristic vehicle data at the service centre.

3. A method according to claim 1 or 2, **characterised in that** means for transmitting a suitability message (10), relating to the suitability of the mobile telephone for connection to the motor vehicle device, are provided by the service centre to the mobile telephone.

4. A method according to claim 1 or 2, **characterised in that** means for transmitting a suitability message, relating to the suitability of the mobile telephone for connection to the motor vehicle device, are provided by the service centre to the motor vehicle device.

5. A method according to claim 3 or 4, **characterised in that** the suitability message from the service centre is automatically output in response to the transmission of the characteristic vehicle data and the characteristic telephone data.

## Revendications

1. Procédé de contrôle de la compatibilité d'un téléphone mobile (2) pour être relié à au moins une installation (20) d'un véhicule automobile (1),
**caractérisé en ce que**
on détermine les données caractéristiques du véhicule pour décrire l'installation du véhicule,
- à l'aide de l'installation du véhicule on saisit les données du téléphone décrivant le téléphone mobile,
- un centre de service fixe (4) fournit des moyens d'évaluation de l'aptitude d'un téléphone mobile décrit par les données caractéristiques du téléphone pour être relié à une installation du véhicule décrite par les données caractéristiques du véhicule,
- on transmet les données caractéristiques du véhicule et les données caractéristiques du téléphone par une liaison de communication (8) indépendante du téléphone mobile, entre le véhicule automobile et le centre de service, vers ce centre de service pour évaluer la compatibilité du téléphone mobile pour être relié à l'installation du véhicule automobile.

2. Procédé selon la revendication 1,
**caractérisé en ce que**
les données caractéristiques du véhicule concernent le véhicule automobile, et
parmi les données caractéristiques du véhicule, le centre de service fournit les données caractéristiques relative à l'installation du véhicule automobile.

3. Procédé selon la revendication 1 ou 2,
**caractérisé par**
des moyens pour transmettre une information de compatibilité (10), concernant la compatibilité du téléphone mobile pour être relié à l'installation du véhicule automobile, cette information étant transmise par le centre de service au téléphone mobile.

4. Procédé selon la revendication 1 ou 2,
**caractérisé par**
des moyens pour transmettre une information de compatibilité concernant la compatibilité du téléphone mobile pour être relié à l'installation du véhicule automobile, par le centre de services vers l'installation du véhicule automobile.

5. Procédé selon la revendication 3 ou 4,
**caractérisé en ce que**
l'information de compatibilité est émise par le centre de service, automatiquement en réponse à la transmission des données caractéristiques du véhicule et des données caractéristiques du téléphone.
